# EUROPEAN PATENT APPLICATION

(11) **EP 4 589 670 A1**
(43) Date of publication of application: **23.07.2025**
(21) Application number: 24215089.4
(22) Date of filing: 25.11.2024
(51) Int. Cl.: H01M 4/04, H01M 4/139

(54) **APPARATUS AND METHOD FOR MANUFACTURING ELECTRODE**

(30) Priority: 28.12.2023 KR 20230195236
(71) Applicant: Samsung SDI Co., Ltd., Yongin-si, Gyeonggi-do 17084 (KR)
(72) Inventor: Kim, Hyun Woo, Suwon-si, Gyeonggi-do 16678 (KR)
(74) Representative: Gulde & Partner

(57) **Abstract**

An apparatus and method for manufacturing electrodes are disclosed. An electrode manufacturing apparatus includes: a cutting unit (220) configured to cut an electrode plate parallel to a progress direction of the electrode plate to produce two or more cut electrode plates including a first cut electrode plate and a second cut electrode plate; and rolling rolls including a pair of first rolls configured to roll the first cut electrode plate and a pair of second rolls configured to roll the second cut electrode plate. The electrode manufacturing apparatus can manufacture electrodes without curvature and/or wrinkling, thickness variation between rolls, and reduction in productivity.

## Description

### BACKGROUND

### 1. Field

Aspects of embodiments of the present invention relate to an apparatus and method for manufacturing an electrode.

### 2. Description of the Related Art

A secondary battery can be charged and discharged unlike a primary cell that cannot be charged. Low-capacity secondary batteries may be used in small, portable electronic devices, such as smartphones, feature phones, notebook computers, digital cameras, and camcorders, and high-capacity secondary batteries are widely used as power sources for motors in hybrid and electric vehicles and as power storage cells. Such a secondary battery includes an electrode assembly, a case receiving the electrode assembly, and electrode terminals connected to the electrode assembly.

The electrode assembly includes an anode and a cathode. The anode and the cathode are referred to as electrodes. These electrodes include a substrate and an active material layer formed on the substrate. For example, the anode includes an anode substrate and an anode material layer formed on the anode substrate, and the cathode includes a cathode substrate and a cathode material layer formed on the cathode substrate.

These electrodes require the substrate and the active material layer to be secured to each other for improvement in charge/discharge performance and/or for safety. Thus, the electrodes may be formed by rolling the substrates, each of which is formed with the active material layer.

Here, multiple electrodes may be manufactured at the same time by rolling a substrate formed with an active material layer for mass production, followed by cutting the rolled substrate. However, since the substrate and the active material layer are formed of different materials with different properties, the electrodes can be deformed during rolling or cutting.

This section is included to provide a better understanding of the background of the invention and thus may include information which is not necessarily prior art.

### SUMMARY

The invention is defined by the appended claims. The description that follows is subjected to this limitation. Any disclosure lying outside the scope of said claims is only intended for illustrative as well as comparative purposes. According to an aspect of embodiments of the present invention, an apparatus and method for manufacturing electrodes through rolling and/or cutting of an electrode plate are provided. According to another aspect of embodiments of the present invention, an electrode manufacturing apparatus and/or an electrode manufacturing method that may solve the above-described problems is provided.

According to an aspect of one or more embodiments, for example, an electrode manufacturing apparatus and/or an electrode manufacturing method that manufactures an electrode with minimal or reduced wrinkles in a substrate is provided.

According to another aspect of one or more embodiments, for example, an electrode manufacturing apparatus and/or an electrode manufacturing method that manufactures an electrode with reduced curvature is provided.

According to another aspect of one or more embodiments, for example, an electrode manufacturing apparatus and/or an electrode manufacturing method that manufactures an electrode with improved thickness variation between reels is provided.

Further, according to another aspect of one or more embodiments, an electrode manufacturing apparatus and/or an electrode manufacturing method that solves the above problems while maintaining yield of electrodes is provided.

The above and other aspects and features of the present invention will become apparent from the following description of some embodiments of the present invention.

According to one or more embodiments of the present invention, an electrode manufacturing apparatus includes: a cutter configured to cut an electrode plate parallel to a progress direction of the electrode plate to produce two or more cut electrode plates including a first cut electrode plate and a second cut electrode plate; and rolling rolls including a pair of first rolls configured to roll the first cut electrode plate and a pair of second rolls configured to roll the second cut electrode plate.

According to one or more embodiments of the present invention, an electrode manufacturing method includes: cutting an electrode plate parallel to a progress direction of the electrode plate to produce two or more cut electrode plates including a first cut electrode plate and a second cut electrode plate; and rolling the two or more cut electrode plates including a first cut electrode plate and a second cut electrode plate through rolling rolls including a pair of first rolls and a pair of second rolls.

### BRIEF DESCRIPTION OF THE DRAWINGS

FIG. 1 to FIG. 4 are schematic views of lithium secondary batteries according to some embodiments of the present invention.
FIG. 5 is a schematic side view of an electrode manufacturing apparatus.
FIG. 6 is a schematic side view of an electrode manufacturing apparatus according to an embodiment of the present invention.
FIG. 7 is a flowchart illustrating an electrode manufacturing method according to an embodiment of the present invention.
FIGS. 8A and 8B are schematic top and side views, respectively, of an electrode manufacturing apparatus according to an embodiment of the present invention.
FIGS. 9A and 9B are schematic top and side views, respectively, of an electrode manufacturing apparatus according to an embodiment of the present invention.
FIGS. 10A and 10B are schematic top and side views, respectively, of an electrode manufacturing apparatus according to an embodiment of the present invention.
FIG. 11 is a flowchart illustrating an electrode manufacturing method according to an embodiment of the present invention.

### DETAILED DESCRIPTION

Herein, some example embodiments of the present invention will be described in further detail with reference to the accompanying drawings. However, it is to be understood that the following embodiments are provided by way of illustration, and the present invention is not limited thereto and is defined by the appended claims and equivalents thereto.

When an arbitrary element is referred to as being disposed (or placed or placed) "above" (or "below") or "on" (or "under") a component, it may mean that the arbitrary element is placed in contact with the upper (or lower) surface of the component and may also mean that another component may be interposed between the component and any arbitrary element disposed (or placed or placed) on (or under) the component

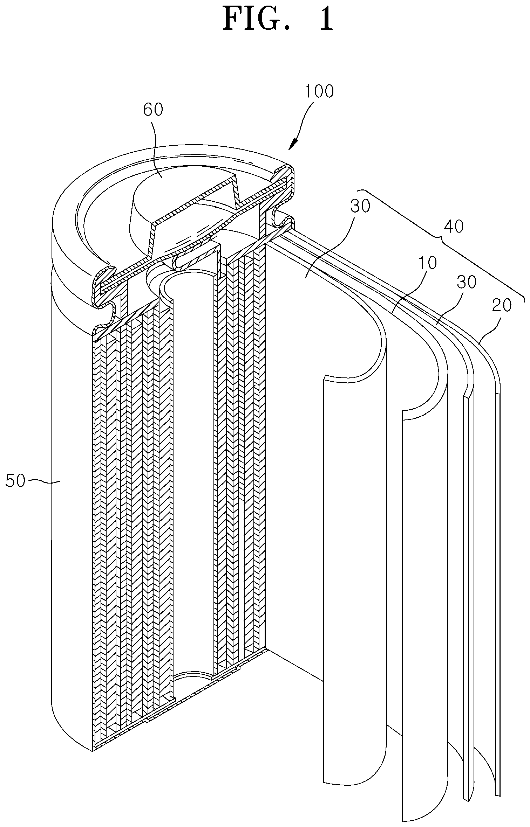

FIG. 1 to FIG. 4 are schematic views of lithium secondary batteries according to some embodiments of the present invention.

### Lithium secondary battery

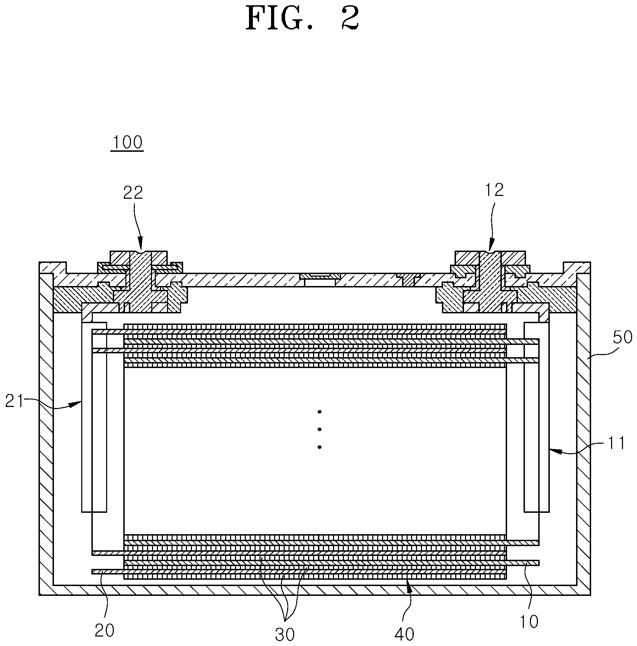

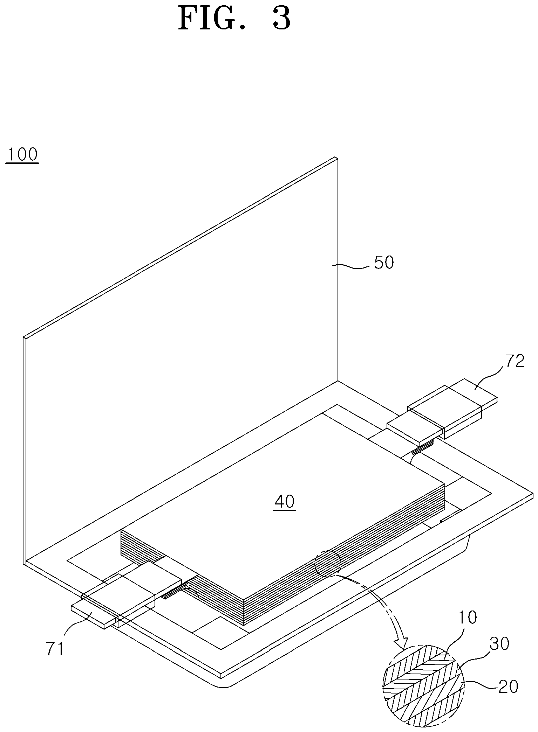

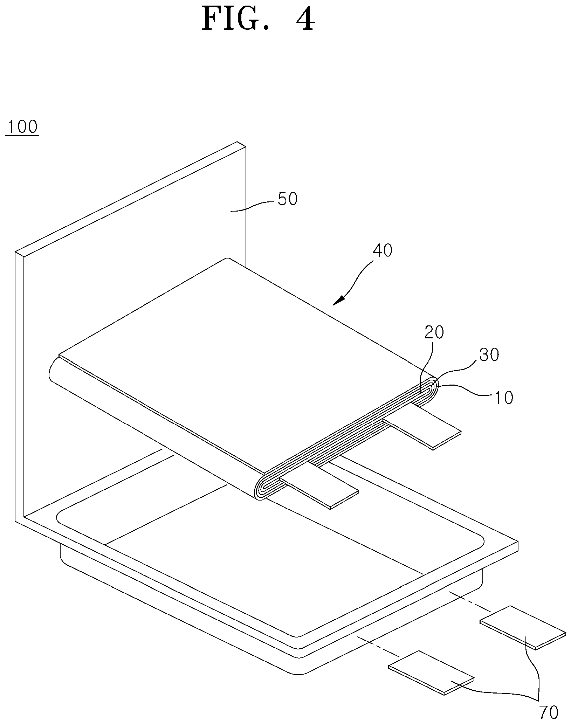

Lithium secondary batteries may be classified into a cylindrical secondary battery, a faceted, or prismatic, secondary battery, a pouch type secondary battery, a coin type secondary battery, and the like based on the shapes thereof. FIG. 1 to FIG. 4 are schematic views of lithium secondary batteries according to some embodiments of the present invention, in which FIG. 1 shows a cylindrical secondary battery, FIG. 2 shows a faceted, or prismatic, secondary battery, and FIG. 3 and FIG. 4 show pouch-type secondary batteries. Referring to FIG. 1 to FIG. 4, a lithium secondary battery 100 may include an electrode assembly 40 in which a separator 30 is interposed between a cathode 10 and an anode 20, and a case 50 that receives the electrode assembly 40 therein. The cathode 10, the anode 20, and the separator 30 may be embedded in or accommodated together with an electrolyte (not shown). In an embodiment, the lithium secondary battery 100 may include a sealing member 60 that seals the case 50, as shown in FIG. 1. In an embodiment, as shown in FIG. 2, the lithium secondary battery 100 may include a cathode lead tab 11, a cathode terminal 12, an anode lead tab 21, and an anode terminal 22. In an embodiment, referring to FIG. 3 and FIG. 4, the lithium secondary battery 100 may include electrode tabs 70, e.g., a cathode tab 71 and an anode tab 72, which function as electrical pathways conducting current formed in the electrode assembly 40 to the outside.

### Cathode material

As a cathode material, a compound allowing reversible intercalation and deintercalation of lithium (lithiated intercalation compound) may be used. In an embodiment, the cathode material may be at least one complex oxide of a metal selected from among cobalt, manganese, nickel, and combinations thereof with lithium.

The composite oxide may be a lithium transition metal composite oxide. In an embodiment, the composite oxide may be a lithium nickel oxide, a lithium cobalt oxide, a lithium manganese oxide, a lithium iron phosphate compound, a cobalt-free nickel-manganese oxide, or a combination thereof.

By way of example, the composite oxide may be a compound represented by any of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐDₐ (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In an embodiment, the cathode material may be a high nickel-content cathode material containing 80 mol% or more, 85 mol% or more, 90 mol% or more, 91 mol% or more, or 94 mol% to 99 mol% of nickel relative to 100 mol% of metal excluding lithium in the lithium transition metal complex oxide. The high nickel-content cathode material can achieve high capacity and thus can be applied to high capacity/high density lithium secondary batteries.

### Cathode

The cathode 10 for the lithium secondary battery 100 may include a current collector and a cathode material layer formed on the current collector. The cathode material layer includes a cathode material and may further include a binder and/or a conductive material.

In an embodiment, the cathode 10 may further include an additive capable of acting as a sacrificial cathode.

In an embodiment, the cathode material may be present in an amount of 90 wt% to 99.5 wt% based on 100 wt% of the cathode material layer, and each of the binder and the conductive material may be present in an amount of 0.5 wt% to 5 wt% based on 100 wt% of the cathode material layer.

The binder serves to attach cathode material particles to each other while attaching the cathode material to the current collector. The binder may include, for example, any of polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

The conductive material imparts conductivity to the electrodes and may be any electrically conductive material that does not cause chemical change in cells under construction. The conductive material may include, for example, any of carbon materials, such as natural graphite, artificial graphite, carbon black, acetylene black, Ketjen black, carbon fiber, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

In an embodiment, the current collector may be Al, without being limited thereto.

### Anode material

The anode material includes a material allowing reversible intercalation/deintercalation of lithium ions, lithium metal, lithium metal alloy, a material capable of being doped to lithium and de-doped therefrom, or a transition metal oxide.

The material allowing reversible intercalation/deintercalation of lithium ions may include a carbon-based anode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, any of soft carbon, hard carbon, mesoporous pitch carbides, calcined coke, and the like.

The lithium metal alloy may be an alloy of lithium, and a metal selected from among Na, K, Rb, Cs, Fr, Be, Mg, Ca, Sr, Si, Sb, Pb, In, Zn, Ba, Ra, Ge, Al, and Sn may be used.

The material capable of being doped to lithium and de-doped therefrom may be an Si-based anode material or an Sn-based anode material. The Si-based anode material may be silicon, a silicon-carbon composite, SiOₓ (0<x<2), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based anode material may be Sn, SnO₂, an Sn alloy, or a combination thereof.

The silicon-carbon composite may be a composite of silicon and amorphous carbon. According to an embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particle. In an embodiment, the amorphous carbon may be placed between the primary silicon particles such that, for example, the primary silicon particles are coated with amorphous carbon. The secondary particles may be dispersed in an amorphous carbon matrix.

In an embodiment, the silicon-carbon composite may further include crystalline carbon. For example, the silicon-carbon composite may include a core containing crystalline carbon and silicon particles, and an amorphous carbon coating layer formed on the core.

The Si-based anode material or the Sn-based anode material may be used in combination with the carbon-based anode material.

### Anode

The anode 20 for the lithium secondary battery 100 may include a current collector and an anode material layer formed on the current collector. The anode material layer includes an anode material and may further include a binder and/or a conductive material.

In an embodiment, for example, the anode material layer may include 90 wt% to 99 wt% of the anode material, 0.5 wt% to 5 wt% of the binder, and 0 wt% to 5 wt% of the conductive material.

The binder attaches the anode material particles to each other while attaching the anode material to the current collector. The binder may be a non-aqueous binder, an aqueous binder, a dry binder, or a combination thereof.

The non-aqueous binder may include any of polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the anode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material imparts conductivity to the electrodes and may be any electronically conductive material that does not cause chemical change in cells under construction. In an embodiment, the conductive material may include, for example, any of carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; or mixtures thereof.

In an embodiment, the anode current collector may be selected from copper foil, nickel foil, stainless steel foil, titanium foil, nickel foam, copper foam, a conductive metal-coated polymer base, and combinations thereof.

### Electrolyte

The electrolyte for the lithium secondary battery 100 includes a non-aqueous organic solvent and a lithium salt.

The non-aqueous organic solvent functions as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC).

The ester-based solvents may include any of methyl acetate, ethyl acetate, n-propyl acetate, dimethyl acetate, methyl propionate, ethyl propionate, decanolide, mevalonolactone, valerolactone, caprolactone, and the like.

The ether-based solvents may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include ethyl alcohol, isopropyl alcohol, and the like, and non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolanes; and the like.

The non-aqueous organic solvent may be used alone or as a mixture thereof.

In an embodiment, in use of the carbonate-based solvent, a mixture of a cyclic carbonate and a chained carbonate may be used, and the cyclic carbonate and the chained carbonate may be mixed in a volume ratio of 1:1 to 1:9.

The lithium salt is a substance that is soluble in an organic solvent and functions as a source of lithium ions in a battery, enabling operation of a basic lithium secondary battery while facilitating transfer of the lithium ions between the cathode and the anode. Examples of the lithium salts may include at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separator

Depending on the type of lithium secondary battery 100, a separator 30 may be interposed between the cathode 10 and the anode 20. For such a separator 30, polyethylene, polypropylene, polyvinylidene fluoride, or at least two layers thereof may be used as well as mixed layers, such as a polyethylene/polypropylene bilayer separator, a polyethylene/polypropylene/polyethylene trilayer separator, a polyethylene/polyethylene/polypropylene trilayer separator, and the like.

The separator 30 may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

In an embodiment, the inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiOs, Mg(OH)₂, boehmite, and combinations thereof, without being limited thereto.

The organic material and the inorganic material may be present in a mixed state in one coating layer or may be present in the form of a stack structure of a coating layer including the organic material and a coating layer including the inorganic material.

As described with reference to FIG. 1 to FIG. 4, the secondary battery 100 includes the electrode assembly 40. In an embodiment, the electrode assembly 40 is formed by stacking the cathode 10, the anode 20, and the separator 30 between the cathode 10 and the anode 20.

Electrodes include the cathode 10 and the anode 20. The electrodes are formed from electrode plates. Thus, for example, the cathode 10 includes a cathode plate, and the anode 20 includes an anode plate.

The cathode 10 and/or the anode 20 includes a current collector and an active material layer formed on the current collector, as described above. The active material layer includes, for example, an active material, a binder, and/or a conductive material, as described above. For example, the cathode 10 includes a cathode current collector and a cathode active material layer formed on the cathode current collector. Here, the cathode active material layer may include a cathode material, a cathode binder, and/or a conductive material. For example, the anode 20 includes an anode current collector and an anode active material layer formed on the anode current collector. The anode active material layer may include an anode material, an anode binder, and/or a conductive material.

The active material layer is formed of a different material and/or in a different structure from the current collector. Accordingly, the active material layer and the current collector can exhibit weak adhesion to each other. However, if the active material layer is separated from the current collector or is weakly secured to the current collector, the secondary battery can suffer from deterioration in charge/discharge efficiency and energy density and/or can suffer from safety issues. Therefore, it is desired to ensure that the active material layer and the current collector are well attached and/or secured to each other. Herein, a method of performing a rolling process to attach the active material layer to the current collector will be described.

Herein, a structure in which the active material layer is coated onto or attached to the current collector will be referred to as an electrode plate. Here, the electrode plate may be formed in any structure by coating the active material layer in a slurry state onto the current collector or by attaching the active material layer in a free-standing film state to the current collector.

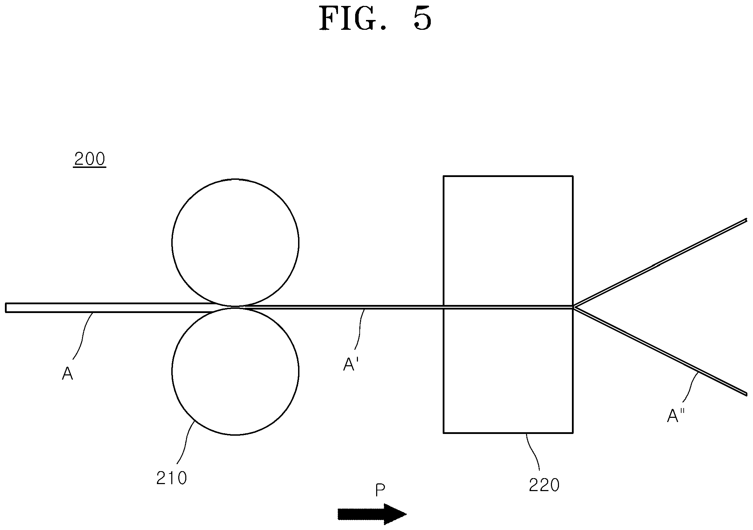

FIG. 5 is a schematic side view of an electrode manufacturing apparatus.

In FIG. 5, reference numeral 200 denotes the electrode manufacturing apparatus. Further, in FIG. 5, P denotes a progress direction of an electrode plate A. Here, the electrode plate A may be subjected to, for example, multi-column coating to increase production yield. For example, the electrode plate A may include multiple columns of active material layers on a single current collector.

The electrode manufacturing apparatus 200 rolls and/or cuts the electrode plate A to manufacture electrodes (including, for example, the cathode 10 and/or the anode 20 illustrated in FIG. 1 to FIG. 4). For example, when the multiple columns of active material layers are formed on the electrode plate A, the electrode manufacturing apparatus 200 may manufacture the electrodes by rolling the electrode plate A in multiple columns, followed by cutting the electrode plate A in each column.

In an embodiment, the electrode manufacturing apparatus 200 includes a rolling roll 210 and a cutting unit, or cutter, 220.

The rolling roll 210 performs rolling on the electrode plate A. For example, the rolling roll 210 includes at least a pair of rolls. The rolling roll 210 imparts a certain rolling pressure (e.g., a preset rolling pressure) to the electrode plate A passing through a gap between the pair of rolls. As a result, the rolling roll 210 can secure adhesion between the current collector and the active material layer. For example, the rolling roll 210 can secure adhesion between the current collector and each of the active material layers formed in multiple columns.

The cutting unit 220 cuts a rolled electrode plate A'. For example, the cutting unit 220 cuts the rolled electrode plate A' parallel to a progress direction P of the electrode plate A. For example, the cutting unit 220 cuts the rolled electrode plate A' such that a single column of active material layer is disposed on the current collector. The cutting unit 220 cuts the electrode plate A' into multiple cut electrode plates A". Here, one cut electrode plate A" may be formed in a structure in which a single column of active material layer is attached to the current collector. For example, when the electrode plate A includes a current collector and three columns of active material layers attached to the current collector, the electrode plate A may be cut into three cutting electrode plates A" by the cutting unit 220.

In this way, the electrode manufacturing apparatus 200 can improve productivity of electrodes by performing multi-column rolling and cutting. However, when rolling is performed after cutting, the electrode can be curved and/or the current collector can be wrinkled due to a difference in elongation between the current collector and the active material layer upon rolling. Further, when the active material layers coated in multiple columns are rolled concurrently (e.g., simultaneously) by a single rolling roll 210, there may be a problem of thickness variation between reels.

The following description will focus on measures capable of addressing this problem while improving productivity of electrodes through multi-column rolling and cutting.

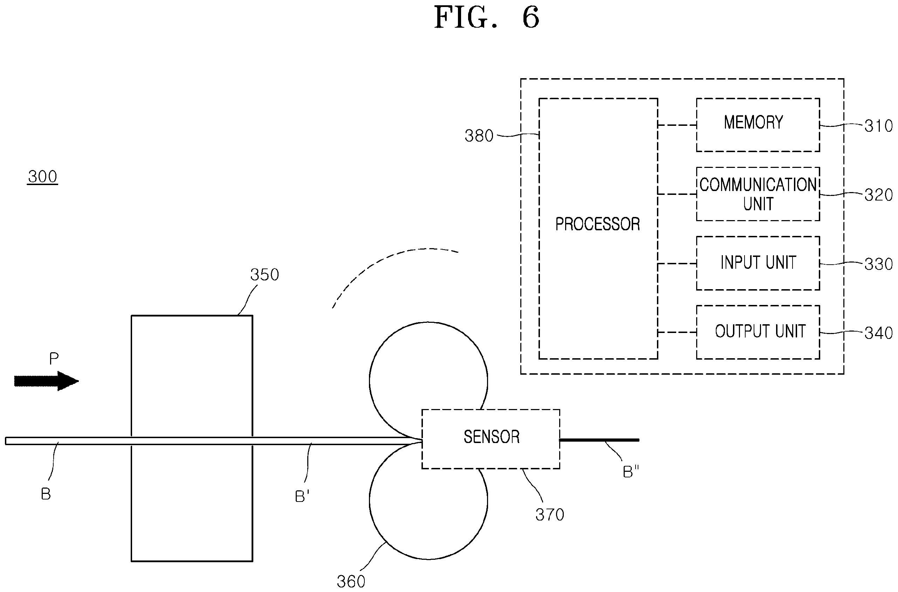

FIG. 6 is a schematic side view of an electrode manufacturing apparatus according to an embodiment of the present invention.

In FIG. 6, reference numeral 300 denotes an electrode manufacturing apparatus according to an embodiment of the present invention. In FIG. 6, B denotes an electrode plate and P denotes a progress direction of the electrode plate B.

The electrode plate B may be previously subjected to, for example, multi-column coating to increase productivity. For example, the electrode plate B may include multiple columns of active material layers on a single current collector. In an embodiment, the multiple columns of active material layers may be arranged parallel to the progress direction of the electrode plate B.

The electrode manufacturing apparatus 300 rolls and/or cuts the electrode plate B to manufacture electrodes (including, for example, the cathode 10 and/or the anode 20 illustrated in FIG. 1 to FIG. 4). For example, when the multiple columns of active material layers are formed on the electrode plate B, the electrode manufacturing apparatus 300 may manufacture the electrodes by rolling the electrode plate B in multiple columns, followed by cutting the electrode plate B in each column.

In an embodiment, the electrode manufacturing apparatus 300 includes a cutting unit, or cutter, 350 and rolling rolls 360. The electrode manufacturing apparatus 300 may further include a sensor 370 and/or a processor 380. In an embodiment, the electrode manufacturing apparatus 300 may further include at least one of a memory 310, a communication unit 320, an input unit 330, and an output unit 340. However, components of the electrode manufacturing apparatus 300 are not limited to the components shown in FIG. 6, and the electrode manufacturing apparatus 300 may include only some of the components shown in FIG. 6 and/or may include additional components in addition to the components shown in FIG. 6. The components of the electrode manufacturing apparatus 300 will be described below.

The memory 310 stores instructions required to operate the electrode manufacturing apparatus 300. In an embodiment, for example, the instructions include instructions to set a rolling pressure of the rolling rolls 360 based on a thickness of a cut electrode plate B'. In another embodiment, for example, the instructions include instructions to control the rolling pressure of each of the rolling rolls 360.

The memory 310 may be, for example, volatile memory or non-volatile memory. The memory 110 may be, for example, any of a CPU, cache, DRAM, persistent memory, flash SSD, HDD, CD/DVD, cloud server, and the like.

The communication unit 320 enables communication between inner components of the electrode manufacturing apparatus 300 or between the secondary battery manufacturing apparatus 300 and an external server or an external device. The communication unit 320 may perform wireless or wired communication. The communication unit 320 may perform short-range or long-range communication. The communication unit 320 may implement, for example, a wired local area network (LAN), a wireless LAN (WLAN), and the like. The communication unit 320 may employ, for example, any of Bluetooth, Zigbee, radio frequency identification (RFID), Wi-Fi, 5G, LoRa, and the like.

The input unit 330 receives user commands from a user. The input unit 330 may include, for example, a mechanical input device (for example, a keyboard, a mouse, or the like), a touch panel, or the like.

The output unit 340 receives data generated by the inner components of the electrode manufacturing apparatus 300 and/or external data received by the electrode manufacturing apparatus 300. The data includes data about width, thickness, and the like of the electrode plate B cut by the electrode manufacturing apparatus 300. In an embodiment, the data includes data about thickness, weight, humidity variation, and the like before and after rolling of the electrode plate B by the electrode manufacturing apparatus 300.

In an embodiment, the output unit 340 includes, for example, a display for outputting visual data, a speaker for outputting auditory data, and a haptic module for outputting tactile data. However, it is to be understood that the output unit 340 is not limited thereto and may include any type of output unit capable of outputting data.

In addition, although not shown in the drawings, the electrode manufacturing apparatus 300 may further include an electrode plate conveyer that conveys the electrode plate B between respective components within the electrode manufacturing apparatus 300. For example, the electrode plate conveyer conveys the electrode plate B to the cutting unit 350 when the electrode plate B is introduced into the electrode manufacturing apparatus 300. In an embodiment, the electrode plate conveyer may convey the electrode plate B' cut by the cutting unit 350 toward the rolling rolls 360. In an embodiment, the electrode plate conveyer conveys the electrode plate B" rolled by the rolling rolls 360 to another component or outside the electrode manufacturing apparatus 300.

The cutting unit 350 cuts the electrode plate B. In an embodiment, the cutting unit 350 may include at least one blade for performing slitting. For example, the at least one blade may cut the electrode plate B while rotating at high speed.

For example, the cutting unit 350 cuts the electrode plate B parallel to the progress direction P of the electrode plate. For example, the cutting unit 320 cuts the electrode plate B such that a single column of active material layer is disposed on the current collector. The cutting unit 350 cuts the electrode plate B so as to have a number of cut electrode plates B' corresponding to a number of columns of active material layers on the current collector. For example, when the electrode plate B includes a current collector and three columns of active material layers attached to the current collector, the cutting unit 220 may cut the electrode plate B into three cut electrode plates B'.

In this way, the cutting unit 350 may generate two or more cut electrode plates B'. For example, the two or more cut electrode plates B' may include a first cut electrode plate and a second cut electrode plate. In an embodiment, each of the cut electrode plates B' may be formed in a structure in which a single column of active material layer is attached to the current collector.

The rolling rolls 360 perform rolling on the cut electrode plate B'. In an embodiment, the rolling rolls 360 include a pair of rolls. The rolls of the pair of rolls are placed adjacent to each other while being spaced apart by a distance (e.g., a predetermined distance) from each other. The rolls of the pair of rolls rotate in opposite directions. As a result, the rolling rolls 360 roll the cut electrode plate B' passing through a gap between the pair of rolls. Here, the rolling rolls 360 may adjust the rolling pressure on the cut electrode plate B' by adjusting a gap between the pair of rolls. For example, the rolling rolls 360 may increase the rolling pressure on the cut electrode plate B' by reducing the gap between the pair of rolls, and, for example, the rolling rolls 360 may decrease the rolling pressure on the cut electrode plate B' by increasing the gap between the pair of rolls.

The cut electrode plate B" rolled by the rolling rolls 360 may have a smaller thickness after rolling than before rolling. In addition, the electrode plate B" may exhibit better adhesion between the current collector and the active material layer after rolling than before rolling.

The rolling rolls 360 include multiple pairs of rolling rolls to perform rolling on multiple cut electrode plates B' concurrently (e.g., simultaneously) or sequentially. For example, the rolling rolls 360 may include a pair of first rolls adapted to roll the first cut electrode plate and a pair of second rolls adapted to roll the second cut electrode plate. In this case, while the pair of first rolls performs rolling on the first cut electrode plate, the second rolls may roll the second cut electrode plate concurrently (e.g., simultaneously) or sequentially.

The sensor 370 senses at least one of information about the electrode plate B, all or some of the components of the electrode manufacturing apparatus 300, and/or an external environment of the electrode manufacturing apparatus 300. For example, the sensor 370 senses a thickness of the electrode plate B" rolled by the rolling rolls 360.

In an embodiment, for example, the sensor 370 includes at least one selected from among a vision sensor, a proximity sensor, a gyroscope sensor, a motion sensor, an acceleration sensor, a LiDAR sensor, a displacement sensor, a distance sensor, and a laser sensor.

The processor 380 controls all or some of the components of the electrode manufacturing apparatus 300. In an embodiment, the processor 380 may be embedded in the electrode manufacturing apparatus 300. In another embodiment, the processor 380 may be placed outside the electrode manufacturing apparatus 300 and may control each of the components of the electrode manufacturing apparatus 300 through the communication unit 320.

The processor 380 may include, for example, any of a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), a field programmable gate array (FPGA), and the like.

For example, the processor 380 may control a cutting position of the electrode plate B by the cutting unit 350. In an embodiment, the processor 380 may control the rolling pressure of the rolling roll 360. In this way, the processor 380 may control the components of the electrode manufacturing apparatus 300 to manufacture electrodes based on the information sensed by the sensors 370, by artificial intelligence (Al) embedded in the processor 380, in response to instructions stored in the memory 310, in response to instructions received through the communication unit 320, and/or in response to instructions received through the input unit 330.

With these components, the electrode manufacturing apparatus 300 according to an embodiment of the present invention may manufacture electrodes, which may be free from curvature or minimize or reduce generation of curvature. In addition, the electrode manufacturing apparatus 300 can prevent or substantially prevent generation of wrinkles in the current collector while performing multi-column rolling and/or can improve thickness variation between reels.

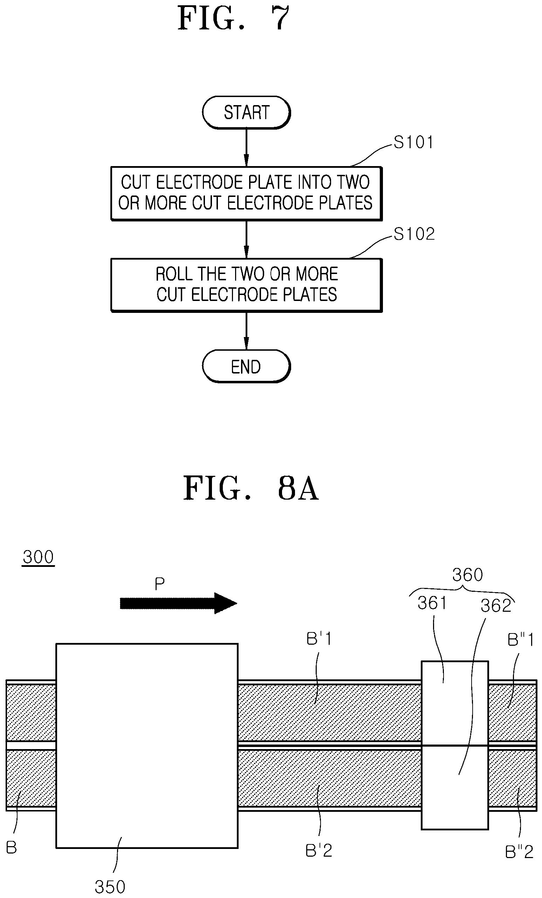

FIG. 7 is a flowchart illustrating an electrode manufacturing method according to an embodiment of the present invention.

Referring to FIG. 7, a method of manufacturing electrodes using the electrode manufacturing apparatus 300 illustrated in FIG. 6 will be described below. However, it is to be understood that the electrode manufacturing method illustrated in FIG. 7 may be performed not only by the electrode manufacturing apparatus 300, but also by any component, device, and/or system capable of performing each of the tasks or steps illustrated in FIG. 7.

Referring to FIG. 7, the electrode manufacturing method according to the embodiment includes a task or step of cutting an electrode plate B into two or more cut electrode plates B' (S101). A description of S101 may be the same as or similar to the description of the cutting unit 350 illustrated in FIG. 6. Thus, the electrode manufacturing method allows production of a large number of electrodes at the same time through rolling and cutting of the electrode plate B coated in multiple columns.

Referring to FIG. 7, the electrode manufacturing method according to an embodiment includes a task or step of rolling each of the two or more cut electrode plates B' (S102). As described above, each of the cut electrode plates B' is rolled by different rolling rolls 360, respectively. A description of S102 may be the same as or similar to the description of the rolling rolls 360 illustrated in FIG. 6. In this way, the electrode manufacturing method can prevent or substantially prevent generation of curvature or wrinkles by rolling each of the multiple cut electrode plates B'.

As such, the electrode manufacturing method according to an embodiment can provide electrodes with improved productivity and quality by cutting the electrode plate B, followed by rolling each of the cut electrode plates B'.

With reference to FIG. 6 and FIG. 7, the electrode manufacturing apparatus 300 and/or the electrode manufacturing method in which the electrode plates B are first cut and then each of the cut electrode plates B' is rolled has been described above. The rolling rolls 360 including multiple rolling rolls have been described above.

In an embodiment, for example, the rolling rolls 360 include multiple rolls, each of which includes a pair of rolls. With this structure, the rolling rolls 360 may roll the multiple cut electrode plates B' concurrently (e.g., simultaneously) or sequentially.

For example, the rolling rolls 360 may include a pair of first rolls 361 and a pair of second rolls 362. In an embodiment, for example, the first rolls 361 roll a first cut electrode plate B'1 to provide a first rolled electrode plate B"1 rolled by the first rolls 361. Further, for example, the second rolls 362 may roll a second cut electrode plate B'2 to provide a second rolled electrode plate B"2 rolled by the second rolls 362 while the first rolls 361 roll the first cut electrode plate B'1. In another embodiment, for example, the second rolls 362 may roll the second cut electrode plate B'2 before or after the first rolls 361 roll the first cut electrode plate B'1.

The first rolls 361 and the second rolls 362 may roll the first cut electrode plate B'1 or the second cut electrode plate B'2 concurrently (e.g., simultaneously) or sequentially depending on an arrangement thereof.

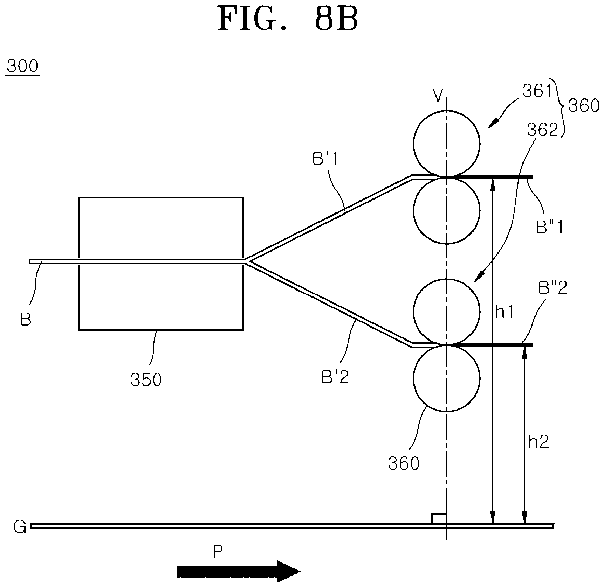

Next, referring to FIG. 8 to FIG. 10, cutting and rolling of the electrode plate B will be described in further detail through some embodiments of an arrangement of the multiple rolling rolls. For convenience of description, the rolling rolls 360 may be described as including two pairs of rolls, by way of example. However, it is to be understood that the rolling rolls 360 may be composed of any number of rolls so long as the rolling rolls 360 include two or more rolls.

FIGS. 8A and 8B are schematic views of an electrode manufacturing apparatus according to an embodiment of the present invention.

FIG. 8A is a top view of the electrode manufacturing apparatus 300, and FIG. 8B is a side view of the electrode manufacturing apparatus 300. The rolling rolls 360 include a pair of first rolls 361 and a pair of second rolls 362.

In an embodiment, the pair of first rolls 361 and the pair of second rolls 362 may be placed at different heights from a ground G. For example, the pair of first rolls 361 may be placed at a first height h1 from the ground G and the pair of second rolls 362 may be placed at a second height h2 from the ground G. By placing the multiple rolls at different heights, the rolling rolls 360 can roll each of the cut electrode plates B' concurrently (e.g., simultaneously) or sequentially without causing the cut electrode plates B' to bend or warp multiple times. Further, by placing the multiple rolls at different heights, the rolling rolls 360 can roll all of the electrode plates B having different specifications (for example, thickness, width, flexibility, elongation, and the like of the cut electrode plates B'). With this structure, the electrode manufacturing apparatus 300 may be compatible with electrode plates B of different specifications while minimizing or reducing damage to the electrode plates B.

In an embodiment, for example, the pair of first rolls 361 and the pair of second rolls 362 may be placed on a same vertical line V relative to the ground G. Accordingly, the electrode manufacturing apparatus 300 may allow the pair of first rolls 361 and the pair of second rolls 362 to be placed at different heights while being placed at a same distance from the cutting unit 350. With this structure, the electrode manufacturing apparatus 300 allows each of the multiple cut electrode plates B' to be rolled concurrently (e.g., simultaneously).

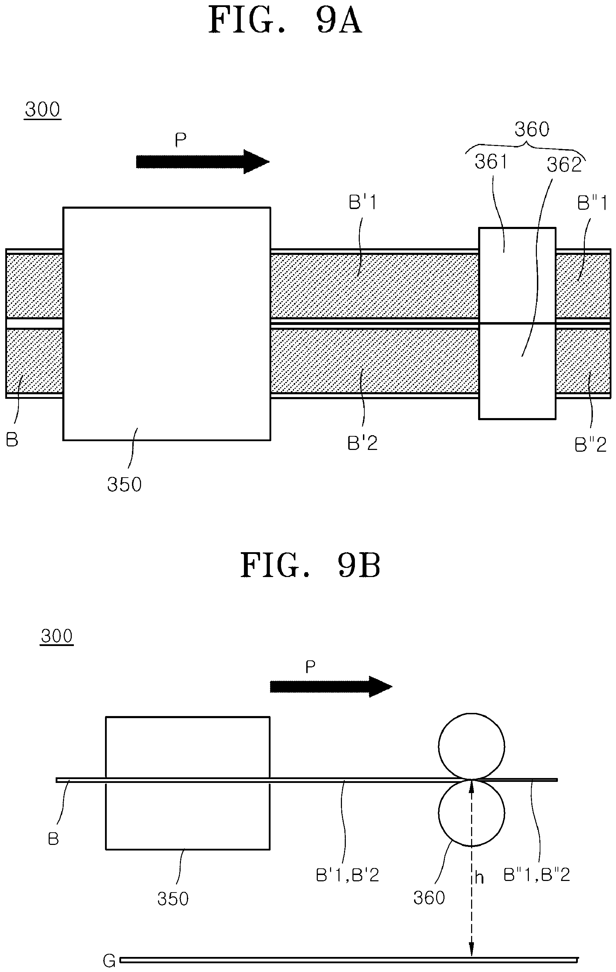

FIGS. 9A and 9B are schematic views of an electrode manufacturing apparatus according to an embodiment of the present invention.

FIG. 9A is a top view of the electrode manufacturing apparatus 300, and FIG. 9B is a side view of the electrode manufacturing apparatus 300. The rolling rolls 360 include a pair of first rolls 361 and a pair of second rolls 362.

The pair of first rolls 361 and the pair of second rolls 362 may be spaced apart from the cutting unit 350 by a same distance. As shown in FIGS. 9A and 9B, the pair of first rolls 361 and the pair of second rolls 362 may be placed at a same height h relative to the ground G. With this structure, the electrode manufacturing apparatus 300 allows the electrode plate B to arrive at the rolling rolls 360 from the cutting unit 350 without bending, curling, and/or warping. In this way, the electrode manufacturing apparatus 300 may prevent or substantially prevent damage to the electrodes due to bending of the electrode plate B. Further, the electrode manufacturing apparatus 300 allows each of the multiple cut electrode plates B' to be subjected to rolling concurrently (e.g., simultaneously).

However, as shown in FIGS. 8A and 8B, the pair of first rolls 361 and the pair of second rolls 362 may be spaced apart from the cutting unit 350 by a same distance and may be placed at different heights relative to the ground G. The effects of this structure are described above with reference to FIGS. 8A and 8B.

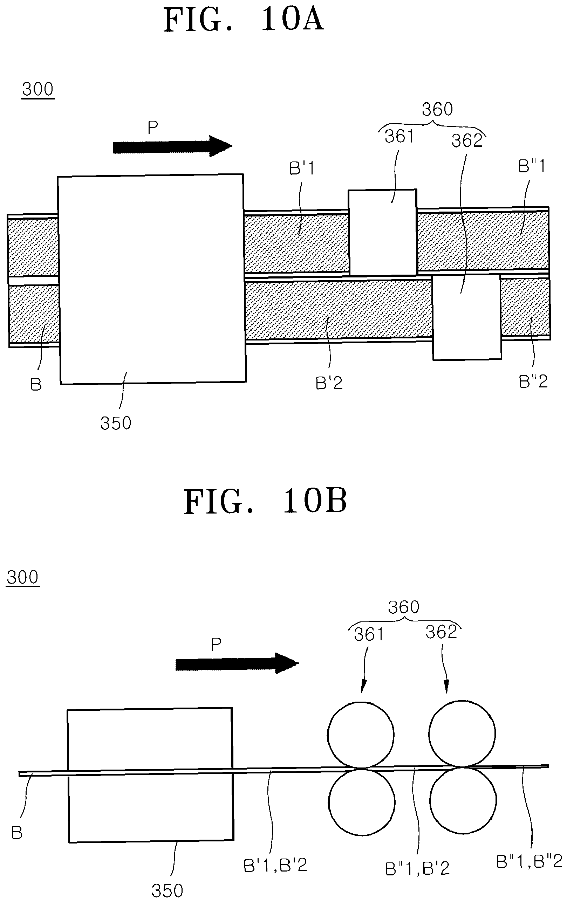

FIGS. 10A and 10B are schematic views of an electrode manufacturing apparatus according to an embodiment of the present invention.

FIG. 10A is a top view of the electrode manufacturing apparatus 300, and FIG. 10B is a side view of the electrode manufacturing apparatus 300. The rolling rolls 360 include a pair of first rolls 361 and a pair of second rolls 362.

The pair of first rolls 361 and the pair of second rolls 362 may be spaced apart from the cutting unit 350 by different distances.

For example, the first cut electrode plate B'1 and the second cut electrode plate B'2 may have different sizes (for example, thickness) or may be used for different purposes even when formed from the same electrode plate B using a same material. In this case, for example, the first cut electrode plate B'1 may be cut by the cutting unit 350 and rolled by the rolling rolls 360 immediately after cutting. On the other hand, for example, the second cut electrode plate B'2 may be cut by the cutting unit 350 and then subjected to a process (e.g., a predetermined process) before rolling by the rolling rolls 360. The process may include, for example, drying, additional coating, and the like. In this case, even when the first cut electrode plate B'1 and the second cut electrode plate B'2 are formed at the same time, the first cut electrode plate B'1 and the second cut electrode plate B'2 may be sequentially subjected to rolling.

The electrode manufacturing apparatus 300 according to an embodiment of the invention is capable of rolling each of the cut electrode plates according to characteristics of each electrode manufactured. As a result, the electrode manufacturing apparatus 300 according to an embodiment can improve both production efficiency and quality of the electrodes.

As shown in FIGS. 9A and 9B, the pair of first rolls 361 and the pair of second rolls 362 may be placed at the same height relative to the ground G. This arrangement allows the electrode manufacturing apparatus 300 to have a compact size.

However, unlike the structure shown in the drawings, the pair of first rolls 361 and the pair of second rolls 362 may be spaced apart from the cutting unit 350 by different distances and may be placed at different heights relative to the ground G. With this structure, the electrode manufacturing apparatus 300 can provide the rolling rolls 360 that are thicker than the width of the cut electrode plate B'. Accordingly, the electrode manufacturing apparatus 300 can provide the rolling rolls 360 compatible with any cut electrode plates B' having various widths.

With reference to FIG. 8A to FIG. 10B, the arrangement of the rolling rolls 360 has been described above according to some embodiments. However, it is to be understood that the arrangement of the rolling rolls 360 is not limited thereto. For example, an arrangement of the rolling roll 360 may be realized through a combination of the embodiments described above with reference to FIG. 8A to FIG. 10B. For example, the rolling rolls 360 may include a first roll, a second roll, and a third roll. In an embodiment, the first roll and the third roll may be placed at different heights relative to the ground. The first roll and the second roll may be spaced apart from the cutting unit 350 by a same distance. The third roll may be spaced apart from the cutting unit 350 by a different distance than the first and second rolls.

Typically, the electrode plate and/or electrodes are not flexible. Accordingly, if the electrode plate or the electrode is bent or made to travel along a curve, the manufactured electrodes may be damaged. The electrode manufacturing apparatus 300 according to one or more embodiments of the present invention can take into account these characteristics of each electrode plate by, for example, different arrangements of the rolling rolls depending on specifications of the electrodes required.

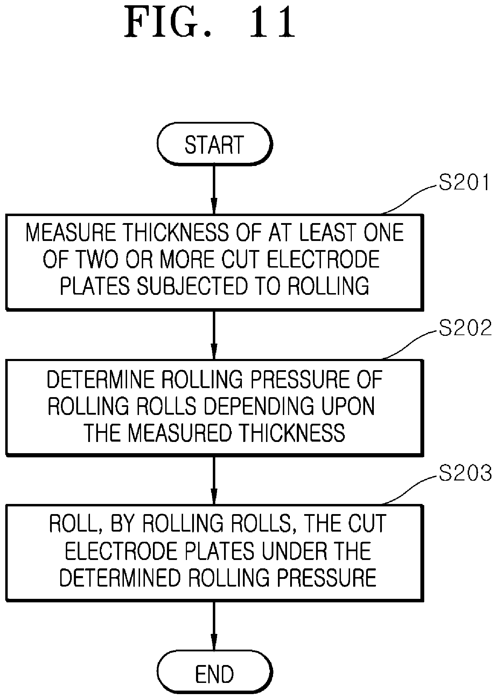

FIG. 11 is a flowchart illustrating an electrode manufacturing method according to an embodiment of the present invention.

With reference to FIG. 6 to FIG. 10B, the electrode manufacturing apparatus 300 adapted to cut and/or roll the electrode plate B has been described. Referring to FIG. 11, the process of rolling the cut electrode plate B' by the electrode manufacturing apparatus 300 will be described in further detail.

Referring to FIG. 11, the electrode manufacturing method according to an embodiment of the present invention includes a task or step of measuring a thickness of at least one of two or more cut electrode plates B" subjected to rolling (S201).

The sensor 370 senses the thickness of the cut electrode plate B" subjected to rolling.

In an embodiment, the sensor 370 is disposed at a side of the rolling rolls 360. For example, the sensor 370 may be disposed at an exit side of the rolling rolls 360 through which the cut electrode plate B" is ejected from the rolling rolls 360.

In an embodiment, the sensor 370 includes a light emitting part that emits light and a calculating part that calculates the thickness. The light emitting part emits light in a direction of the rolling rolls 360. The direction may be, for example, a direction perpendicular to the progress direction P of the electrode plate. The calculation part calculates the thickness of the rolled electrode plate using light emitted from the light emitting part. For example, the calculation part may measure a height of light when the rolled electrode plate is not passing by. In addition, the calculation part may measure the height of light when the rolled electrode plate is passing by. The calculation part calculates the thickness of the rolled electrode plate based on a difference in height of the light emitted from the light emitting part. For example, the calculation part calculates the thickness of the cut electrode plate B" subjected to rolling. As a result, the sensor 370 can sense the thickness of the cut electrode plate B" subjected to rolling. However, it is to be understood that the present invention is not limited thereto, and the sensor 370 may sense the thickness of the electrode plate in various ways.

In an embodiment, the sensor 370 includes multiple sensors including, for example, a first sensor and a second sensor. The first sensor may be mounted on a side of the pair of first rolls 361, and the second sensor may be mounted on a side of the pair of second rolls 362. With this arrangement, the sensor 370 may sense the thickness of each of the cut electrode plates B" rolled by each of the plurality of rolling rolls 360.

Referring to FIG. 11, the electrode manufacturing method according to an embodiment of the present invention includes a task or step of determining a rolling pressure of the rolling rolls 360 based on the measured thickness (S202).

The processor 380 compares the thickness sensed in S201 with a certain thickness (e.g., a preset thickness). The certain thickness may include a thickness pre-stored in the memory 310, a thickness received through the communication unit 320, a thickness input through the input unit 330, and/or a thickness determined to be most suitable depending on application of the electrodes by artificial intelligence, for example.

The processor 380 determines the rolling pressure of the rolling roll 360 based on a comparison result. For example, upon determining that the sensed thickness is greater than the certain thickness, the processor 380 may increase the rolling pressure of the rolling roll 360 above a current rolling pressure. In addition, for example, upon determining that the sensed thickness is less than the certain thickness, the processor 380 may decrease the rolling pressure of the rolling roll 360 below the current rolling pressure. Upon determining that the sensed thickness falls within a same range of the certain thickness, the processor 380 may maintain a current rolling pressure of the rolling roll 360. Here, the same range is a range that is determined to be the same as or equal to the certain thickness providing no problem on performance of the electrode plate or the electrodes manufactured from the electrode plate.

Referring to FIG. 11, the electrode manufacturing method according to an embodiment of the invention includes a task or step of rolling, by the rolling rolls 360, the cut electrode plate B' under a determined rolling pressure (S203).

The processor 380 controls the rolling rolls 360 based on the rolling pressure determined in S202. In an embodiment, for example, upon determining that the rolling pressure needs to be increased, the processor 380 controls the rolling rolls such that the gap between the pair of rolls decreases. Further, for example, upon determining that the rolling pressure needs to be decreased, the processor 380 may control the rolling rolls such that the gap between the pair of rolls increases.

The rolling rolls 360 roll the cut electrode plate B' under a controlled rolling pressure.

In this way, the electrode manufacturing apparatus 300 and/or the electrode manufacturing method according to the embodiments of the invention can produce higher quality electrodes by performing individual control with respect to each of the cut electrode plates B'.

## Claims

1. An electrode manufacturing apparatus (200, 300) comprising:
a cutting unit (220, 350) configured to cut an electrode plate (A, B) parallel to a progress direction (P) of the electrode plate (A, B) to produce two or more cut electrode plates (A', B') comprising a first cut electrode plate (B'1) and a second cut electrode plate (B'2); and
rolling rolls (210, 360) comprising a pair of first rolls (361) configured to roll the first cut electrode plate (B'1) and a pair of second rolls (362) configured to roll the second cut electrode plate (B'2).

2. The electrode manufacturing apparatus (200, 300) as claimed in claim 1, wherein the first rolls (361) and the second rolls (362) are configured to concurrently roll the first cut electrode plate (B'1) and the second cut electrode plate (B'2), respectively.

3. The electrode manufacturing apparatus (200, 300) as claimed in claim 1 or 2, wherein the pair of first rolls (361) and the pair of second rolls (362) are arranged at different heights relative to a ground.

4. The electrode manufacturing apparatus (200, 300) as claimed in any one of the preceding claims, wherein the pair of first rolls (361) and the pair of second rolls (362) are arranged on a same vertical line relative to a ground.

5. The electrode manufacturing apparatus (200, 300) as claimed in any one of the preceding claims, wherein the pair of first rolls (361) and the pair of second rolls (362) are spaced apart from the cutting unit (220) by a same distance.

6. The electrode manufacturing apparatus (200, 300) as claimed in any one of the preceding claims, wherein the pair of first rolls (361) and the pair of second rolls (362) are spaced apart from the cutting unit (220) by different distances.

7. The electrode manufacturing apparatus (300) as claimed in any one of the preceding claims, further comprising:
a sensor (370) to detect a thickness of the electrode plate (B") rolled by the rolling rolls (360); and
a processor (380) to control a rolling pressure of the rolling rolls (360) based on the detected thickness.

8. The electrode manufacturing apparatus (300) as claimed in claim 7, wherein the processor (380) compares the detected thickness with a certain thickness, determines a rolling pressure of the rolling rolls (360) based on a comparison result, and controls the rolling pressure of the rolling rolls (360) based on the determined rolling pressure.

9. The electrode manufacturing apparatus (300) as claimed in claim 7, wherein the sensor (370) comprises: a light emitting part configured to emit light in a direction of the rolling rolls (360); and a calculation part to calculate the thickness of the rolled electrode plate (B") based on a difference in the emitted light.

10. The electrode manufacturing apparatus (300) as claimed in claim 7, wherein the sensor (370) comprises a first sensor (370) mounted on the pair of first rolls (361) and a second sensor (370) mounted on the pair of second rolls (362).

11. An electrode manufacturing method comprising:
cutting an electrode plate (A, B) parallel to a progress direction (P) of the electrode plate (A, B) to produce two or more cut electrode plates (A', B') comprising a first cut electrode plate (B'1) and a second cut electrode plate (B'2); and
rolling the two or more cut electrode plates (A', B') through rolling rolls (210, 360) comprising a pair of first rolls (361) and a pair of second rolls (362).

12. The electrode manufacturing method as claimed in claim 11, wherein the rolling the two or more cut electrode plates (A', B') comprises concurrently rolling the first cut electrode plate (B'1) and the second cut electrode plate (B'2) through the pair of first rolls (361) and the pair of second rolls (362).

13. The electrode manufacturing method as claimed in claim 11, wherein the rolling the two or more cut electrode plates (A', B') comprises:
measuring, by a sensor (370), a thickness of at least one of the two or more cut electrode plates (A', B') subjected to rolling;
determining, by a processor (380), a rolling pressure of the rolling rolls (210, 360) based on the measured thickness; and
rolling, by the rolling rolls (210, 360), the cut electrode plates (A', B') under the determined rolling pressure.
